# EUROPÄISCHE PATENTSCHRIFT

(11) **EP 1 929 131 B1**
(45) Veröffentlichungstag und Bekanntmachung des Hinweises auf die Patenterteilung: **08.09.2010**
(21) Anmeldenummer: 06805903.9
(22) Anmeldetag: 27.09.2006
(51) Int. Cl.: F01M 5/00, F16H 57/04, F01P 7/16, G05D 23/13

(54) **EINRICHTUNG ZUM ABKOPPELN DES ÖLDURCHFLUSSES DURCH EINEN KÜHLER**
DEVICE FOR UNCOUPLING THE OIL FLOW THROUGH A RADIATOR
DISPOSITIF POUR DERIVER LE FLUX D'HUILE A TRAVERS UN RADIATEUR

(30) Priorität: 29.09.2005 DE 102005046635
(43) Veröffentlichungstag der Anmeldung: 11.06.2008
(73) Patentinhaber: ZF Friedrichshafen AG, 88038 Friedrichshafen (DE)
(72) Erfinder: MARTIN, Hans-Joachim, 88079 Kressbronn (DE); FRITZER, Anton, 88677 Markdorf (DE)
(86) Internationale Anmeldenummer: PCT/EP2006/009382
(87) Internationale Veröffentlichungsnummer: WO 2007/036354

(56) Entgegenhaltungen:
- US-A- 2 516 390
- US-A- 3 404 837
- US-A- 4 190 198
- US-A- 4 344 564

## Beschreibung

Die vorliegende Erfindung betrifft eine Einrichtung zum Abkoppeln des Öldurchflusses durch einen Kühler, insbesondere einen Getriebekühler bei niedrigen Temperaturen. Das Document US 3 404 837 A zeigt eine derartige Einrichtung gemäß dem Oberbegriff des Patentanspruchs 1.

Bei einer Öltemperatur, die beispielsweise kleiner ∼ 80 °C beträgt, ist es vorteilhaft, wenn der Ölfluss am Kühler vorbeigeführt wird, damit das Getriebe schneller die Betriebstemperatur erreicht. Auf diese Weise wird der Wirkungsgrad des Getriebes erhöht. Des weiteren ist notwendig, Einrichtungen zum Schutz des Kühlers gegen Druckspitzen vorzusehen, was in der Regel mittels eines separaten Bypass-Ventils erfolgt.

Aus der US 5,890,509 ist ein Bypassventil bekannt, welches in einem Hydraulikkreis zwischen einem Drehmomentwandler und dem Schmierölkreis angeordnet ist. Dieses Ventil umfasst eine Ventilspule, welche gegen die Kraft einer Druckfeder wirkt, so dass in einem Bypass-Modus Fluid aus dem Drehmomentwandler direkt in den Schmierölkreis fließt, ohne durch den Kühler bzw. den Wärmetauscher geleitet zu werden. Des weiteren ist ein viskositätssensitiver Druckverteiler vorgesehen; hierbei wird bei steigender Temperatur ein Druck in Richtung der Kraft der Druckfeder erzeugt, so dass die Ventilspule in die Kühl-Position verschoben wird, wodurch das Fluid des Drehmomentwandlers durch den Wärmetauscher geleitet wird.

Des weiteren ist aus der US 2004/0204281 A1 ein Kühlsystem für das Betriebsfluid eines Automatgetriebes bekannt, umfassend einen wassergekühlten Ölkühler und einen luftgekühlten Ölkühler, die in Reihe geschaltet sind sowie ein erstes Bypassventil, mittels dessen Betriebsfluid an beiden Kühlern vorbeigeführt wird, wenn die Temperatur T ≤ T1 ist, wobei T1 ein vorgegebener Schwellenwert ist. Des weiteren ist ein zweites Bypassventil vorgesehen, welches im geöffneten Zustand ein Fließen des Fluids über den wassergekühlten Kühler ermöglicht, wenn die Temperatur T ≤ T2 ist, wobei T2 ein vorgegebener Schwellenwert ist.

Ferner ist aus der US 6,253,837 B1 eine Bypass-Einrichtung für einen Wärmetauscher bekannt, welche ein Bypass-Ventil umfasst, mittels dessen bei einem bestimmten Temperaturintervall der Ölfluss am Kühler vorbeigeführt wird. Das Bypass-Ventil umfasst ein Gehäuse mit drei Öffnungen, wobei eine der Öffnungen als Ventilöffnung dient; des weiteren ist im Gehäuse ein temperatursensitiver Aktuator vorgesehen, welcher mit einem Federventil in Wirkverbindung steht, so dass in Abhängigkeit von der Temperatur die Ventilöffnung geöffnet oder geschlossen wird. Hierbei kann die Ventilöffnung mit dem Einlass oder dem Auslass des Wärmetauschers verbunden sein.

Der vorliegenden Erfindung liegt die Aufgabe zugrunde, eine Einrichtung zum Abkoppeln des Öldurchflusses durch einen Kühler, insbesondere einen Getriebekühler anzugeben, welche günstig herstellbar und montierbar ist. Zudem sollen Druckspitzen in der Kühlerzuführung weitgehend eliminiert werden, ohne die Notwendigkeit eines separaten Bypass-Ventils.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird als Einrichtung zum Abkoppeln des Öldurchflusses ein Bypass-Ventil mit einem Zulauf des Öls vom Kühler, einem Zulauf über eine Bypass-Leitung und mit einem Ablauf des Öls vorgeschlagen, mit einer innerhalb des Ventilgehäuses gegen die Kraft einer in Reihe zur Ventileinheit geschalteten Druckfeder verschiebbar angeordneten Ventileinheit, umfassend ein thermosensitives Element, welches sich in Abhängigkeit von der Temperatur des Öls derart innerhalb des Ventilgehäuses bewegt, dass bei Temperaturen unterhalb eines Schwellenwertes der Zulauf des Öls vom Kühler geschlossen und der Zulauf über eine Bypass-Leitung geöffnet ist, wobei bei Temperaturen oberhalb des Schwellenwertes der Zulauf des Öls vom Kühler geöffnet und der Zulauf über die Bypass-Leitung geschlossen ist und wobei die komplette Ventileinheit ab einem vorgegebenen Öldruck gegen die Kraft der Druckfeder axial verschiebbar ist, wodurch der Zulauf über die Bypass-Leitung geöffnet ist.

Im Rahmen einer ersten Ausführungsform der Erfindung wird als Einrichtung zum Abkoppeln des Öldurchflusses ein Bypass-Ventil vorgeschlagen, welches als thermosensitives Element eine Feder aus einer Memory Metall Legierung umfasst, die derart angeordnet ist, dass sie bei einer Temperatur über einen vorgegebenen Schwellenwert einen ersten und einen zweiten im Ventil vorgesehenen Kolben verschiebt, wodurch der Zulauf über die Bypass-Leitung geschlossen und gleichzeitig der Zulauf des Öls vom Kühler geöffnet wird. Hierbei stehen die Enden der Feder jeweils mit einem Kolben in Wirkverbindung, wobei bei einer Temperatur über einen vorgegebenen Schwellenwert beide Kolben durch die Feder axial verschoben werden. Hierbei liegt bei einer Temperatur oberhalb des Schwellenwertes der dem Zulauf über die Bypass-Leitung zugewandte Kolben an einer Kante bzw. Stufenbohrung an; bei Temperaturen unterhalb des Schwellenwertes liegt der dem Zulauf über den Kühler zugewandte Kolben an einer weiteren Kante bzw. Stufenbohrung an.

Bei Temperaturen unterhalb des Schwellenwertes ist die Feder kraftlos, so dass erfindungsgemäß bei geschlossenem Zulauf vom Kühler der Ölfluss über die Bypass-Leitung am Kühler vorbeigeführt wird.

Gemäß der Erfindung umfasst das Bypass-Ventil eine zusätzliche Druckfeder zum Schutz des Kühlers vor nicht zulässigen Druckspitzen. Hierbei wird die Überdruckfunktion dadurch gewährleistet, dass durch nicht zulässige Druckspitzen an der Eingangsseite des Kühlers der Zulauf über die Bypass-Leitung geöffnet wird, indem die komplette Ventileinheit gegen die Kraft der Druckfeder axial verschoben wird. Hierbei ist neben dem Zulauf über die Bypass-Leitung auch der Zulauf vom Kühler geöffnet.

Im Rahmen einer weiteren Ausführungsform der Erfindung wird ein Bypass-Ventil vorgeschlagen, in dem als thermosensitives Element eine temperaturabhängige Spiralfeder aus Bimetall angeordnet ist, wobei ein Ende der Feder mit einer ersten Buchse und das andere Ende der Feder mit einer zweiten Buchse verbunden ist; die Buchsen liegen hierbei ineinander. Durch die Drehbewegung, die durch eine Temperaturänderung an der Spiralfeder entsteht, werden die zwei ineinanderliegenden Buchsen gegeneinander verdreht, so dass entsprechende Öffnungen verschlossen bzw. geöffnet werden. Auf diese Weise wird bei niedrigen Temperaturen der Zulauf über eine Bypass-Leitung geöffnet und der Zulauf des Öls vom Kühler geschlossen und bei Temperaturen, die einen Schwellenwert übersteigen, der Zulauf des Öls vom Kühler geöffnet und der Zulauf über die Bypass-Leitung geschlossen. Des weiteren ist gemäß der Erfindung ein Deckel vorgesehen, mittels dessen die Ventileinheit bei der Montage eingestellt werden kann, um Toleranzen der Feder auszugleichen.

Auch bei dieser Ausführungsform ist zum Realisieren der Überdruckfunktion eine zusätzliche Druckfeder vorgesehen, welche in Reihe zur Spiralfeder geschaltet ist, so dass durch nicht zulässige Druckspitzen der Zulauf über die Bypass-Leitung geöffnet wird, indem die komplette Ventileinheit gegen die Kraft der Druckfeder axial verschoben wird.

Durch die erfindungsgemäße Konzeption entfällt in vorteilhafter Weise die Notwendigkeit eines separaten Bypass-Ventils zum Schutz des Kühlers gegen Druckspitzen. Zudem ist das erfindungsgemäße Bypass-Ventil kostengünstig herstellbar und einfach montierbar.

Die Erfindung wird im Folgenden anhand der beigefügten Figuren beispielhaft näher erläutert. Es zeigen:
- Figur 1: eine Schnittansicht einer ersten Ausführungsform eines er- findungsgemäßen Bypass-Ventils; und
- Figur 2: eine Schnittansicht einer weiteren Ausführungsform eines er- findungsgemäßen Bypass-Ventils.

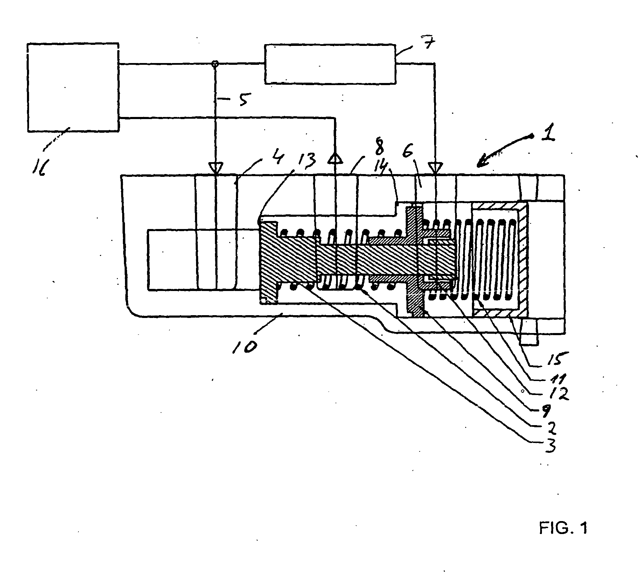

In Figur 1 ist ein erfindungsgemäßes Bypass-Ventil 1 gezeigt, bei dem das thermosensitive Element als Feder 2 aus einer Memory Metall Legierung ausgebildet ist, die derart angeordnet ist, dass sie bei einer Temperatur über einen vorgegebenen Schwellenwert einen im Ventil 1 vorgesehenen und dem Zulauf 4 über die Bypass-Leitung 5 zugewandten Kolben 3 verschiebt, wodurch der Zulauf 4 über die Bypass-Leitung 5 geschlossen wird, wenn der Kolben 3 an der Kante bzw. Stufenbohrung 13 anliegt. Gleichzeitig wird der dem Zulauf 6 des Öls vom Kühler 7 zugewandte Kolben 9 in die entgegengesetzte Richtung verschoben, wodurch sich der Kolben 9 von der Kante bzw. Stufenbohrung 14 entfernt, so dass der Zulauf 6 des Öls vom Kühler 7 geöffnet ist. Der Ablauf des Öls ist mit 8 und die Hydrauliksteuerung ist mit 16 bezeichnet. Der Kolben 3 sowie die Feder 2 und der Kolben 9 bilden eine innerhalb des Ventilgehäuses 10 gegen die Kraft einer in Reihe zur Ventileinheit geschalteten Druckfeder 11 verschiebbar angeordnete Ventileinheit. Wie Figur 1 zu entnehmen ist, ist die Druckfeder 11 durch einen Stopfen 15 axial gesichert und wird durch diesen abgestützt.

Hierbei ist der Kolben 9 verschiebbar um den Kolben 3 angeordnet und mittels einer Buchse 12 an der der Druckfeder 11 zugewandten Seite axial gesichert. Wenn bei geschlossenem Zulauf 4 über die Bypass-Leitung 5 der Öldruck einen Schwellenwert überschreitet, wird die komplette Ventileinheit gegen die Kraft der Druckfeder 11 axial verschoben, wodurch der Zulauf 4 über die Bypass-Leitung 5 geöffnet wird.

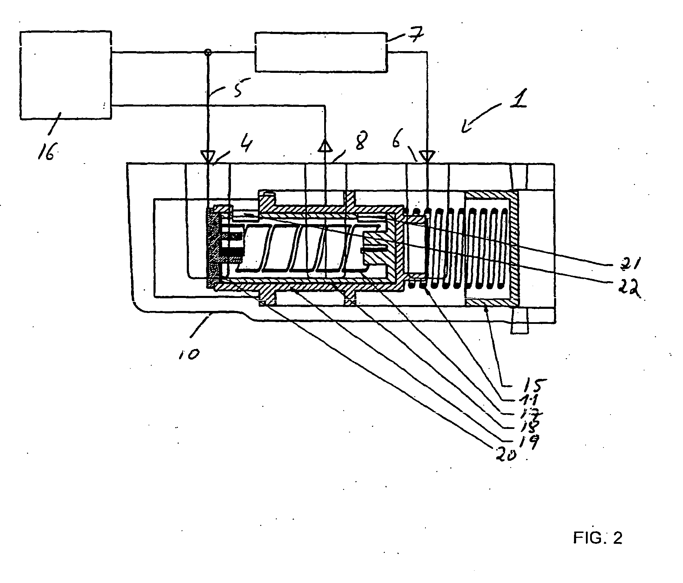

Bei der Ausführungsform gemäß Figur 2 ist als thermosensitives Element anstelle der Feder aus einer Memory Metall Legierung eine temperaturabhängige Spiralfeder 17 aus Bimetall vorgesehen, wobei ein Ende der Feder 17 mit einer ersten Buchse 18 und das andere Ende der Feder 17 mit einer zweiten Buchse 19 verbunden ist; die Buchsen 18 und 19 liegen ineinander.

Eine Temperaturänderung an der Feder 17 resultiert in einer Drehbewegung der Feder 17 und somit in einer Verdrehung der ineinanderliegenden Buchsen 18, 19 gegeneinander, so dass entsprechende Öffnungen 21, 22 verschlossen bzw. geöffnet werden. Auf diese Weise wird bei niedrigen Temperaturen der Zulauf 4 über die Bypass-Leitung 5 geöffnet und der Zulauf 6 des Öls vom Kühler 7 geschlossen und bei Temperaturen, die einen Schwellenwert übersteigen, der Zulauf 6 des Öls vom Kühler 7 geöffnet und der Zulauf 4 über die Bypass-Leitung 5 geschlossen. Zum Ausgleichen von Toleranzen der Feder 17 ist gemäß der Erfindung an der dem Zulauf 4 über die Bypass-Leitung 5 zugewandten Seite der Feder 17 ein Deckel 20 vorgesehen, mittels dessen die Ventileinheit bei der Montage eingestellt werden kann.

Selbstverständlich fällt auch jede konstruktive Ausbildung, insbesondere jede räumliche Anordnung der Bauteile der Einrichtung zum Abkoppeln des Öldurchflusses durch einen Kühler an sich sowie zueinander und soweit technisch sinnvoll, unter den Schutzumfang der vorliegenden Ansprüche, ohne die Funktion der Einrichtung zum Abkoppeln des Öldurchflusses, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Bypass-Ventil
- 2: Feder aus einer Memory Metall Legierung
- 3: Kolben
- 4: Zulauf über die Bypass-Leitung
- 5: Bypass-Leitung
- 6: Zulauf des Öls vom Kühler
- 7: Kühler
- 8: Ablauf des Öls
- 9: Kolben
- 10: Ventilgehäuse
- 11: Druckfeder
- 12: Buchse
- 13: Kante
- 14: Kante
- 15: Stopfen
- 16: Hydrauliksteuerung
- 17: Spiralfeder aus Bimetall
- 18: Buchse
- 19: Buchse
- 20: Deckel
- 21: Öffnung
- 22: Öffnung

## Patentansprüche

1. Einrichtung zum Abkoppeln des Öldurchflusses durch einen Kühler, insbesondere einen Getriebekühler bei niedrigen Öltemperaturen, wobei das Bypass-Ventil (1) mit einem Zulauf (6) des Öls vom Kühler (7), einem Zulauf (4) über eine Bypass-Leitung (5) und mit einem Ablauf (8) des Öls ausgebildet ist, mit einer innerhalb des Ventilgehäuses (10) gegen die Kraft einer in Reihe geschalteten Druckfeder (11) verschiebbar angeordneten Ventileinheit, umfassend ein thermosensitives Element (2), welches sich in Abhängigkeit von der Temperatur des Öls derart innerhalb des Ventilgehäuses (10) bewegt, dass bei Temperaturen unterhalb eines Schwellenwertes der Zulauf (6) des Öls vom Kühler (7) geschlossen und der Zulauf (4) über eine Bypass-Leitung (5) geöffnet wird, wobei bei Temperaturen oberhalb des Schwellenwertes der Zulauf (6) des Öls vom Kühler (7) geöffnet und der Zulauf (4) über die Bypass-Leitung (5) geschlossen wird und wobei die komplette Ventileinheit ab einem vorgegebenen Öldruck gegen die Kraft der Druckfeder (11) axial verschiebbar ist, wodurch der Zulauf (4) über eine Bypass-Leitung (5) geöffnet wird, **dadurch gekennzeichnet dass** das thermosensitive Element als Feder (2) aus einer Memory Metall Legierung ausgebildet ist, wobei die Enden der Feder (2) jeweils mit einem Kolben (3, 11) in Wirkverbindung stehen, wobei bei einer Temperatur über einen vorgegebenen Schwellenwert beide Kolben (3,11) durch die Feder (2) verschoben werden, wodurch der Zulauf (4) über die Bypass-Leitung (5) geschlossen wird und der Zulauf (6) des Öls vom Kühler (7) geöffnet wird und wobei bei einer Temperatur unterhalb des Schwellenwertes die Feder (2) kraftlos ist, so dass bei geschlossenem Zulauf (6) vom Kühler (7) der Ölfluss über die Bypass-Leitung (5) am Kühler (7) vorbeigeführt wird.

2. Einrichtung zum Abkoppeln des Öldurchflusses durch einen Kühler nach Anspruch 1, **dadurch gekennzeichnet, dass** bei einer Temperatur oberhalb des Schwellenwertes der dem Zulauf (4) über die Bypass-Leitung (5) zugewandte Kolben (3) an einer Kante bzw. Stufenbohrung (13) anliegt und dass bei Temperaturen unterhalb des Schwellenwertes der dem Zulauf (6) zugewandte Kolben (3) an einer Kante bzw. Stufenbohrung (13) anliegt.

3. Einrichtung zum Abkoppeln des Öldurchflusses durch einen Kühler nach Anspruch 1 oder 2, **dadurch gekennzeichnet, dass** der Kolben (9) verschiebbar um den Kolben (3) angeordnet und mittels einer Buchse (12) an der der Druckfeder (11) zugewandten Seite axial gesichert ist.

4. Einrichtung zum Abkoppeln des Öldurchflusses durch einen Kühler, insbesondere einen Getriebekühler bei niedrigen Öltemperaturen, **dadurch gekennzeichnet, dass** sie als Bypass-Ventil (1) mit einem Zulauf (6) des Öls vom Kühler (7), einem Zulauf (4) über eine Bypass-Leitung (5) und mit einem Ablauf (8) des Öls ausgebildet ist, mit einer innerhalb des Ventilgehäuses (10) gegen die Kraft einer in Reihe geschalteten Druckfeder (11) verschiebbar angeordneten Ventileinheit, umfassend ein thermosensitives Element (2), welches sich in Abhängigkeit von der Temperatur des Öls derart innerhalb des Ventilgehäuses (10) bewegt, dass bei Temperaturen unterhalb eines Schwellenwertes der Zulauf (6) des Öls vom Kühler (7) geschlossen und der Zulauf (4) über eine Bypass-Leitung (5) geöffnet wird, wobei bei Temperaturen oberhalb des Schwellenwertes der Zulauf (6) des Öls vom Kühler (7) geöffnet und der Zulauf (4) über die Bypass-Leitung (5) geschlossen wird und wobei die komplette Ventileinheit ab einem vorgegebenen Öldruck gegen die Kraft der Druckfeder (11) axial verschiebbar ist, wodurch der Zulauf (4) über eine Bypass-Leitung (5) geöffnet wird, wobei das thermosensitive Element als Spiralfeder (17) aus Bimetall ausgebildet ist, wobei ein Ende der Feder (17) mit einer ersten Buchse (18) und das andere Ende der Feder (17) mit einer zweiten Buchse (19) verbunden ist, wobei die Buchsen (18) und (19) ineinanderliegen, so dass durch die Drehbewegung, die durch eine Temperaturänderung an der Spiralfeder (17) entsteht, die zwei ineinanderliegenden Buchsen (18, 19) gegeneinander verdreht werden, wodurch entsprechende Öffnungen (21, 22) verschlossen bzw. geöffnet werden, so dass bei Temperaturen unterhalb eines Schwellenwertes der Zulauf (6) des Öls vom Kühler (7) geschlossen und der Zulauf (4) über die Bypass-Leitung (5) geöffnet ist, wobei bei Temperaturen oberhalb des Schwellenwertes der Zulauf (6) des Öls vom Kühler (7) geöffnet und der Zulauf (4) über die Bypass-Leitung (5) geschlossen ist.

5. Einrichtung zum Abkoppeln des Öldurchflusses durch einen Kühler nach Anspruch 4, **dadurch gekennzeichnet, dass** zum Ausgleichen von Toleranzen der Feder (17) an der dem Zulauf (4) über die Bypass-Leitung (5) zugewandten Seite der Feder (17) ein Deckel (20) vorgesehen ist

## Claims

1. Device for decoupling the oil throughflow through a radiator, in particular a transmission radiator at low oil temperatures, the bypass valve (1) being configured with a feed line (6) for the oil from the radiator (7), a feed line (4) via a bypass line (5) and with an outlet (8) for the oil, with a valve unit which is arranged such that it can be displaced within the valve housing (10) counter to the force of a compression spring (11) which is connected in series, comprising a thermosensitive element (2) which moves within the valve housing (10) as a function of the temperature of the oil in such a way that the feed line (6) for the oil from the radiator (7) is closed and the feed line (4) via a bypass line (5) is opened at temperatures below a threshold value, the feed line (6) for the oil from the radiator (7) being opened and the feed line (4) via the bypass line (5) being closed at temperatures above the threshold value, and the complete valve unit being axially displaceable above a predefined oil pressure counter to the force of the compression spring (11), as a result of which the feed line (4) via a bypass line (5) is opened, **characterized in that** the thermosensitive element is configured as a spring (2) made from a memory metal alloy, the ends of the spring (2) being operatively connected in each case to a piston (3, 11), both pistons (3, 11) being displaced by the spring (2) at a temperature above a predefined threshold value, as a result of which the feed line (4) via the bypass line (5) is closed and the feed line (6) for the oil from the radiator (7) is opened, and the spring (2) being powerless at a temperature below the threshold value, with the result that, when the feed line (6) from the radiator (7) is closed, the oil flow is guided via the bypass line (5) past the radiator (7).

2. Device for decoupling the oil throughflow through a radiator according to Claim 1, **characterized in that**, at a temperature above the threshold value, the piston (3) which faces the feed line (4) via the bypass line (5) bears against an edge or stepped bore (13), and **in that**, at temperatures below the threshold value, the piston (3) which faces the feed line (6) bears against an edge or stepped bore (13).

3. Device for decoupling the oil throughflow through a radiator according to Claim 1 or 2, **characterized in that** the piston (9) is arranged displaceably around the piston (3) and is secured axially by means of a sleeve (12) on the side which faces the compression spring (11).

4. Device for decoupling the oil throughflow through a radiator, in particular a transmission radiator at low oil temperatures, **characterized in that** it is configured as a bypass valve (1) with a feed line (6) for the oil from the radiator (7), a feed line (4) via a bypass line (5) and with an outlet (8) for the oil, with a valve unit which is arranged such that it can be displaced within the valve housing (10) counter to the force of a compression spring (11) which is connected in series, comprising a thermosensitive element (2) which moves within the valve housing (10) as a function of the temperature of the oil in such a way that the feed line (6) for the oil from the radiator (7) is closed and the feed line (4) via a bypass line (5) is opened at temperatures below a threshold value, the feed line (6) for the oil from the radiator (7) being opened and the feed line (4) via the bypass line (5) being closed at temperatures above the threshold value, and the complete valve unit being axially displaceable above a predefined oil pressure counter to the force of the compression spring (11), as a result of which the feed line (4) via a bypass line (5) is opened, the thermosensitive element being configured as a helical spring (17) made from bimetal, one end of the spring (17) being connected to a first sleeve (18) and the other end of the spring (17) being connected to a second sleeve (19), the sleeves (18) and (19) lying inside one another, with the result that the two sleeves (18, 19) which lie inside one another are rotated with respect to one another as a result of the rotational movement which is produced by a temperature change at the helical spring (17), as a result of which corresponding openings (21, 22) are closed or opened, with the result that the feed line (6) for the oil from the radiator (7) is closed and the feed line (4) via the bypass line (5) is opened at temperatures below a threshold value, the feed line (6) for the oil from the radiator (7) being open and the feed line (4) via the bypass line (5) being closed at temperatures above the threshold value.

5. Device for decoupling the oil throughflow through a radiator according to Claim 4, **characterized in that** a cover (20) is provided for compensating for tolerances from the spring (17) on that side of the spring (17) which faces the feed line (4) via the bypass line (5).

## Revendications

1. Dispositif pour dévier le flux d'huile à travers un refroidisseur, en particulier un refroidisseur d'engrenages aux basses températures d'huile, dans lequel la soupape de dérivation (1) est réalisée avec une arrivée (6) de l'huile provenant du refroidisseur (7), une arrivée (4) par une conduite de dérivation (5) et avec un départ (8) de l'huile, avec une unité de soupape disposée de façon coulissante à l'intérieur du boîtier de soupape (10) contre la force d'un ressort de compression (11) monté en série, comprenant un élément thermosensible (2), qui se déplace à l'intérieur du boîtier de soupape (10) en fonction de la température de l'huile, de telle manière que, à des températures inférieures à une valeur de seuil, l'arrivée (6) de l'huile provenant du refroidisseur (7) soit fermée et que l'arrivée (4) par une conduite de dérivation (5) soit ouverte, dans lequel, à des températures supérieures à la valeur de seuil, l'arrivée (6) de l'huile provenant du refroidisseur (7) est ouverte et l'arrivée (4) par la conduite de dérivation (5) est fermée, et dans lequel l'unité de soupape complète est déplaçable axialement contre la force du ressort de compression (11) à partir d'une pression d'huile prédéterminée, l'arrivée (4) par une conduite de dérivation (5) étant de ce fait ouverte, **caractérisé en ce que** l'élément thermosensible est réalisé sous la forme d'un ressort (2) en alliage métallique à mémoire, dans lequel les extrémités du ressort (2) sont en liaison active avec un piston respectif (3, 11), dans lequel, à une température supérieure à une valeur de seuil prédéterminée, les deux pistons (3, 11) sont déplacés par le ressort (2), fermant ainsi l'arrivée (4) par la conduite de dérivation (5) et ouvrant l'arrivée (6) de l'huile provenant du refroidisseur (7), et dans lequel, à une température inférieure à la valeur de seuil, le ressort (2) n'exerce aucune force, de telle manière que, l'arrivée (6) provenant du refroidisseur (7) étant fermée, le flux d'huile est amené à éviter le refroidisseur (7) par la conduite de dérivation (5).

2. Dispositif pour dériver le flux d'huile à travers un refroidisseur selon la revendication 1, **caractérisé en ce que**, à une température supérieure à la valeur de seuil, le piston (3) tourné vers l'arrivée (4) par la conduite de dérivation (5) est appliqué sur une arête ou un alésage étagé (13) et **en ce que**, à des températures inférieures à la valeur de seuil, le piston (3) tourné vers l'arrivée (6) est appliqué sur une arête ou un alésage étagé (13).

3. Dispositif pour dériver le flux d'huile à travers un refroidisseur selon la revendication 1 ou 2, **caractérisé en ce que** le piston (9) est disposé de façon coulissante autour du piston (3) et est bloqué axialement sur le côté tourné vers le ressort de compression (11) au moyen d'une douille (12).

4. Dispositif pour dévier le flux d'huile à travers un refroidisseur, en particulier un refroidisseur d'engrenages aux basses températures d'huile, **caractérisé en ce qu'**il est réalisé sous la forme d'une soupape de dérivation (1) avec une arrivée (6) de l'huile provenant du refroidisseur (7), une arrivée (4) par une conduite de dérivation (5) et avec un départ (8) de l'huile, avec une unité de soupape disposée de façon coulissante à l'intérieur du boîtier de soupape (10) contre la force d'un ressort de compression (11) monté en série, comprenant un élément thermosensible (2), qui se déplace à l'intérieur du boîtier de soupape (10) en fonction de la température de l'huile, de telle manière que, à des températures inférieures à une valeur de seuil, l'arrivée (6) de l'huile provenant du refroidisseur (7) soit fermée et que l'arrivée (4) par une conduite de dérivation (5) soit ouverte, dans lequel, à des températures supérieures à la valeur de seuil, l'arrivée (6) de l'huile provenant du refroidisseur (7) est ouverte et l'arrivée (4) par la conduite de dérivation (5) est fermée, et dans lequel l'unité de soupape complète est déplaçable axialement contre la force du ressort de compression (11) à partir d'une pression d'huile prédéterminée, l'arrivée (4) par une conduite de dérivation (5) étant de ce fait ouverte, dans lequel l'élément thermosensible est réalisé sous la forme d'un ressort spiral (17) en bimétal, dans lequel une extrémité du ressort (17) est reliée à une première douille ((18) et l'autre extrémité du ressort (17) est reliée à une deuxième douille (19), dans lequel les douilles (18) et (19) sont placées l'une dans l'autre de telle manière que le mouvement de rotation, qui naît par suite d'un changement de température sur le ressort spiral (17), fasse tourner l'une par rapport les deux douilles (18, 19) placées l'une dans l'autre, fermant ou ouvrant ainsi des ouvertures correspondantes (21, 22), de telle manière que, à des températures inférieures à une valeur de seuil, l'arrivée (6) de l'huile provenant du refroidisseur (7) soit fermée et que l'arrivée (4) par la conduite de dérivation (5) soit ouverte, dans lequel, à des températures supérieures à la valeur de seuil, l'arrivée (6) de l'huile provenant du refroidisseur (7) est ouverte et l'arrivée (4) par la conduite de dérivation (5) est fermée.

5. Dispositif pour dériver le flux d'huile à travers un refroidisseur selon la revendication 4, **caractérisé en ce que**, pour compenser les tolérances du ressort (17), il est prévu un couvercle (20) sur le côté du ressort (17) tourné vers l'arrivée (4) par la conduite de dérivation (5).
